(19) Europäisches Patentamt
European Patent Office
Office européen des brevets

(11) Publication number: **0 055 497**
**B1**

(12) # EUROPEAN PATENT SPECIFICATION

(45) Date of publication of patent specification: **01.04.87**

(51) Int. Cl.[4]: **B 01 D 53/34,** C 01 B 17/05

(21) Application number: **81201279.7**

(22) Date of filing: **19.11.81**

(54) **Removal of hydrogen sulphide and carbonyl sulphide from gaseous mixtures.**

(30) Priority: **29.12.80 US 220487**

(43) Date of publication of application:
**07.07.82 Bulletin 82/27**

(45) Publication of the grant of the patent:
**01.04.87 Bulletin 87/14**

(84) Designated Contracting States:
**BE DE FR GB IT NL**

(58) References cited:
**DE-A-3 015 739**
**FR-A-2 068 919**
**US-A-4 009 251**
**US-A-4 091 073**

**Enzyklopädie der technischen Chemie-Ullmanns-Band 14-1977-pp 426-427**
**Gas purification - Wohl and Riesenfeld - 2nd Edition - 1974 - pages 607-630**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Lieder, Charles Arthur**
**11906 Westmere**
**Houston Texas 77077 (US)**
Inventor: **Deal, Carl Hosea, Jr.**
**5 Lazee Trail**
**Houston Texas 77024 (US)**

(74) Representative: **Puister, Antonius Tonnis, Mr. et al**
**P.O. Box 302**
**NL-2501 CH The Hague (NL)**

**EP 0 055 497 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a process for the removal of hydrogen sulphide ($H_2S$) and carbonyl sulphide (COS) from a gaseous mixture containing $H_2S$ and COS.

The presence of significant quantities of $H_2S$ in various (also named "sour") industrial gaseous mixtures poses a persistent problem. To remove this contaminant, various procedures have been developed. An additional contaminant in many such gases is COS. In many cases, those processes which remove $H_2S$ are unsuitable for or deficient in the removal of COS. For example, in conventional cyclic processes, using solvent absorption-desorption, the COS is only partly absorbed, so that removal is not efficient.

DE—A—3 015 739 describes a process for the removal of $H_2S$ and COS from a gaseous mixture containing these gases by contacting the gaseous mixture in a first absorption zone with an aqueous absorbent for $H_2S$ to remove $H_2S$ from the mixture, yielding a first treated gaseous mixture containing COS, contacting the first treated gaseous mixture with an aqueous alkanolamine-hydrolysis-medium, which is being recycled in a closed circuit at a temperature which is sufficiently high for hydrolysis of COS into $H_2S$ and $CO_2$, thus forming a second treated gaseous mixture, contacting the latter mixture in a second absorption zone with a fresh aqueous alkanolamine solution to remove $H_2S$ from the mixture and using the solution withdrawn from the second absorption zone as fresh solution in the first absorption zone. The alkanolamine-hydrolysis-medium facilitates the hydrolysis of COS, acting as a kind of catalyst.

This known process has as a disadvantage that the aqueous absorbents for $H_2S$ being used in the first and second absorption zones after regenerationalways have a certain—low $H_2S$ content, thus decreasing the absorption capacity for $H_2S$. Moreover, the aqueous alkanolamine-hydrolysis-medium is not free from chemical degradation and the pH of the medium has to be kept between about 8 and about 12. This may require the presence of a base in the medium.

US—A—4 009 251 describes a process for the removal of $H_2S$ from a gaseous mixture by contacting the mixture with an aqueous solution containing a chelate of a polyvalent metal in order to oxidize the $H_2S$ quantitatively to sulphur. This process is applicable to gaseous streams having very low $H_2S$ contents, of the order of a few parts per million, but the COS remains unaffected.

From Ullmann's Enzyklopädie der technischen Chemie Band 14, (1977) pages 426—427, it is known that certain solid catalysts, like chromium-aluminium or copper-chromium-aluminium comprising catalysts favour the COS-hydrolysis. However, these catalysts absorb the $H_2S$ formed in the hydrolysis, and thus need frequent regeneration.

It is an object of the present invention to remove not only $H_2S$ quantitatively without removing $CO_2$, but also to remove COS in a very effective manner, using hydrolysis catalysts which do not absorb the $H_2S$ formed.

Accordingly, the invention provides a process for the removal of $H_2S$ and COS from a gaseous mixture containing $H_2S$ and COS, comprising the steps:

(a) contacting the gaseous mixture with an aqueous solution containing a reactant and separating a gaseous mixture containing COS from an aqueous mixture which absorbed $H_2S$;

(b) contacting the gaseous mixture containing COS separated in step (a) in the presence of water with a catalyst causing hydrolysis of COS and separating a gaseous mixture containing $CO_2$ and $H_2S$ from the catalyst;

(c) regenerating the aqueous mixture separated in step (a) by stripping, yielding a regenerated solution;

(d) contacting the gaseous mixture containing $CO_2$ and $H_2S$ separated in step (b) with at least a portion of the regenerated solution obtained in step (c), forming a partially reacted aqueous mixture, and separating a purified gas from the aqueous mixture, the separated aqueous mixture being employed as aqueous solution in step (a), optionally in the presence of regenerated solution from step (c) and not used in step (d), characterized in that the reactant in the aqueous solution of step (a) comprises an ion and/or a chelate of an oxidizing polyvalent metal, which produces in step (a) a reduced reactant and sulphur, the reduced reactant being regenerated in step (c) by stripping with oxygen, in that the catalyst causing hydrolysis of COS in step (b) is a solid catalyst comprising Ni, Pd, Pt, Co, Rh or In, in that regenerated reactant obtained in step (c) produces sulphur in step (d), and in that sulphur is removed from the aqueous mixture to be used in step (a), step (d) and/or from the aqueous mixture which has been used in step (a).

In step (a) $H_2S$ is substantially quantitatively removed, notwithstanding the fact that the aqueous solution introduced into step (a) also contains reduced reactant. The position of the equilibrium of COS hydrolysis in step (b) is therefore shifted to the right hand side, COS hydrolysis being substantially complete. Hence, the purified gas seperated in step (d) is substantially free from $H_2S$ and COS.

The portion of the regenerated solution obtained in step (c) and employed in step (d) is preferably a minor portion. If the portion of the aqueous reactant solution which has been employed in step (d) is combined with that portion of the regenerated aqueous reactant solution obtained in step (c), and which has not been used in step (d), sulphur is preferably separated from the mixture thus obtained, yielding aqueous solution containing reactant which is used in step (a). Alternatively, the sulphur from the hydrolysis may be removed separately, or passed on to the contacting of step (a) for "subsequent removal".

Particularly suitable reactant materials include ions of polyvalent metals (and mixtures thereof), such as of iron, vanadium, copper, manganese

and nickel, and include chelates of polyvalent metals (and mixtures thereof), and mixtures of the ions and chelates. As used herein, unless otherwise inconsistent with the intent expressed, the term "mixtures thereof", in referring to the reactant materials indicated, includes mixtures of the ions of polyvalent metals, mixtures of the chelates of polyvalent metals, and mixtures of ions of polyvalent metals and chelates of polyvalent metals. Preferred reactants are iron chelates of an acid of the general formula:

$$(X)_{3-n}\text{—N—}(Y)_n$$

wherein n is a whole number from 1 to 3; Y represents a carboxymethyl or carboxyethyl group; X represents a 2-hydroxyethyl, 2-hydroxypropyl, or an alkyl group having from one to four carbon atoms; or

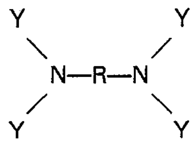

wherein:

- from two to four of the groups Y are selected from carboxymethyl and carboxyethyl groups;
- from zero to two of the groups Y are selected from 2-hydroxyethyl, 2-hydroxypropyl, and
- R represents dimethylene, trimethylene or methylethylene or alternatively 1,2-cyclohexylene or 1,2-benzylene, or a mixture of such iron chelates.

Any polyvalent metal can be used, but iron, copper and manganese are preferred, particularly iron. The polyvalent metal should be capable of oxidizing hydrogen sulphide, while being reduced itself from a higher to a lower valence state, and should then be oxidizable by oxygen from the lower valence state to the higher valence state in a typical redox reaction. Other polyvalent metals which can be used include lead, mercury, palladium, platinum, tungsten, nickel, chromium, cobalt, vanadium, titanium, tantalum, zirconium, molybdenum, and tin.

The polyvalent metal chelates are readily formed in aqueous solution by reaction of an appropriate salt, oxide or hydroxide of the polyvalent metal and the chelating agent in the acid form or an alkali metal or ammonium salt thereof. Exemplary chelating agents include aminoacetic acids derived from ammonia or 2-hydroxyalkylamines, such as glycine, diglycine (iminodiacetic acid), NTA (nitrilotriacetic acid), 2-hydroxyalkyl glycine; di-hydroxyalkyl glycine, and hydroxyethyl or hydroxypropyl diglycine; aminoacetic acids derived from ethylenediamine, diethylenetriamine, 1,2-propylenediamine, and 1,3-propylenediamine, such as EDTA (ethylenediaminetetraacetic acid), HEDTA (N-hydroxyethylethylenediaminetriacetic acid), DETPA (diethylenetriaminepentaacetic acid); aminoacetic acid derivatives of cyclic 1,2-diamines, such as 1,2-diaminocyclohexane-N,N-tetraacetic acid, and 1,2-phenylenediamine-N,N-tetraacetic acid, and the amides of polyaminoacetic acids disclosed in U.S. Patent Specification No. 3,580,950. The amount of reactant compound, chelate, or mixture thereof, supplied is an effective amount, i.e., that amount sufficient to convert all or substantially all of the $H_2S$ in the gaseous mixture, and will generally be on the order of at least about two mol (basis polyvalent metal or chemical equivalent) per mol of $H_2S$. Ratios of from about 2 mol to about 15 mol of compound or chelate per mol of $H_2S$ may be used, with ratios of from about 2 mol per mol to about 5 mol of compound or chelate per mol of $H_2S$ being preferred. The manner of preparing the aqueous reactant solution is a matter of choice and within the skill of the art, and a wide variety of aqueous oxidizing reactant solutions may be employed.

The particular type of gaseous mixture treated is not critical, regardless of which embodiment of the invention is employed, as will be evident to those skilled in the art. Mixtures particularly suited to the practice of the invention are naturally occurring gases, synthesis gases, process gases, and fuel gases produced by gasification procedures, e.g., gases produced by the gasification of coal, petroleum, shale, tar sands, etc. Particularly preferred are coal gasification streams, natural gas streams and refinery feedstocks composed of gaseous hydrocarbon streams, especially those streams of this type having low concentrations of $H_2S$ and $CO_2$. The term "hydrocarbon streams", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbons may be treated by the invention. The $H_2S$ content of the type of streams contemplated will vary extensively, but, in general, will range from about 0.1 per cent to about 5 per cent by volume. COS content may also vary, but preferably will range from about 0.01 per cent to about 1 per cent by volume. Obviously, the amount of $H_2S$ and COS present is not generally a limiting factor in the practice of the invention.

The temperatures employed for the oxidation of $H_2S$ to sulphur as described above are not generally critical, except that higher temperatures appear to enhance decomposition of complexes employed. A relatively wide range of temperatures, e.g., from 10°C to 80°C or even 110°C may be utilized, although a range of from about 20°C to about 60°C is preferred. In many commercial applications, such as the removal of $H_2S$ from natural gas to meet pipeline specifications, contact at ambient temperatures is preferred. Contact

times will range from about 1 second to about 120 seconds, with contact times of 2 seconds to 60 seconds being preferred.

Similarly, the regeneration by stripping with oxygen may be carried out with widely varying temperatures. Preferably, the temperature during the regeneration should be maintained as close as possible to the temperature of the previous reduction. If heat is added to strip or assist regeneration, cooling of the regenerated aqueous solution is required before use for oxidation of further quantities of $H_2S$ to sulphur. In general, temperatures of from about 10°C to 80°C, preferably 20°C to 60°C may be employed.

The pressure in step (a) may vary widely, depending on the pressure of the gas to be treated. For example, pressures in step (a) may vary from 0.1 MPa up to 15.2 MPa or even 20.2 MPa. Pressures of from 0.1 MPa to about 10.1 MPa are preferred. In the regeneration zone or zones, pressures will range from about 0.1 MPa to about 0.3 or 0.4 MPa. The pressure-temperature relationships involved are well understood by those skilled in the art, and need not be detailed herein. Conditions of operation for this type of reaction process are further described in U.S. Patent Specification No. 3,068,065 and British Patent Specification No. 999,799, which disclosures are incorporated herein by reference. The procedure is preferably conducted continuously.

As noted, the oxidizing polyvalent metal compounds and polyvalent metal chelates, are supplied as an aqueous solution. Other solvents or absorbents (or mixtures of absorbents) may be present to enhance $H_2S$ conversion, or absorb $CO_2$, the limiting factors being the degree to which other components of the gaseous mixture (such as the COS) are absorbed in the solvent or absorbent and the degree to which the reactant compounds or chelates may be "salted" out or poisoned. Since the COS is to be removed, as described herein, it is not desired that any absorbent present in the principal contact zone exhibit a significant solvency for COS. If an absorbent is employed, the absorbents employed are those absorbents which have a high degree of selectivity in absorbing $CO_2$ (and preferably $H_2S$ as well) from the gaseous mixtures. Any of the known absorbents conventionally used (or mixtures thereof) which do not affect the activity of the reactant, which exhibit sufficient miscibility or solvency for the reactant or reactant solution, and which do not substantially absorb COS may be employed. The particular absorbent chosen is a matter of choice, given these qualifications, and selection can be made by routine experimentation.

The reactant solution is regenerated by stripping with oxygen. As used herein, the term oxygen includes oxygen-containing gases, such as air. The oxygen stripping accomplishes two functions, the stripping of any residual $CO_2$ (if originally present) and the oxidation of the reduced reactant to its higher oxidation state. The oxygen (in whatever form supplied) is supplied in a stoichiometric excess with respect to the amount of reduced reactant present in the mixture. Preferably, the oxygen is supplied in an amount of from about 1.2 to 3 times excess.

As indicated, the gas stream, after removal of $H_2S$, is treated to remove COS. The hydrolysis of COS is shown by the following formula:

$$COS+H_2O \rightarrow H_2S+CO_2$$

In general, the contacting of the gas stream with the aqueous reactant solution often provides sufficient water, as vapour, for the hydrolysis of the COS, although additional water may be added if the COS concentration is high.

The catalysts used for this reaction comprise Ni, Pd, Pt, Co, Rh or In. In general, most of these materials will be provided as solids deposited on a suitable support material. Preferred support materials are the aluminas, silica aluminas, and silica. The selection of the particular catalyst (and support, if employed) are within the skill of those working in the field. Platinum on alumina is preferred.

The temperatures employed for the hydrolysis are not critical, except in the sense that the temperatures employed will allow substantially complete conversion of the COS. Temperatures will range from about 50°C to 150°C or even 200°C, although a range of from about 50°C to about 150°C is preferred. As noted previously, in many commercial applications, such as the removal of $H_2S$ and COS from natural gas to meet pipeline specifications, contact at ambient temperatures or as close to ambient temperatures as possible are preferred. Those skilled in the art may adjust the temperatures, as needed, to provide efficient reaction temperatures. Contact times will range from about 0.5 second to about 10 seconds, with contact times of 1 second to 3 seconds being preferred. It will be noted that if $CS_2$ is present in the gas stream, the $CS_2$ will be converted by the reaction

$$CS_2+H_2O \rightarrow COS+H_2S$$

The $CS_2$ may then be removed by the expedient of utilization of longer contact times. Pressures employed in the hydrolysis zone will approximate those in the contact or primary contact zone.

In accordance with the invention, the $H_2S$ produced from the COS hydrolysis is removed from the gas stream. If the gaseous mixture containing $CO_2$ and $H_2S$ separated in step (b) is contacted in step (d) with regenerated solution temperatures, pressures, etc. will be similar to those in step (a), the principal difference between the two contacts being the normally relatively smaller amount of $H_2S$ being removed.

In order to describe the invention with greater particularity, reference is made to the accompanying schematic Figure. All values are merely exemplary or calculated.

In the Figure, a gas stream, such as a natural

gas stream containing 1 per cent by volume of $H_2S$ and 0.1 per cent by volume of COS, enters a contactor 1 via a line 2. Contactor 1 is a tray contactor, although any suitable contacting device (such as a venturi) may be employed. An aqueous solution containing a reactant comprising an ion and/or a chelate of an oxidizing polyvalent metal, e.g. a solution containing 0.4 molar of the Fe(III) complex of (N-hydroxyethyl)ethylenediaminetriacetic acid, enters contactor 1 via a line 3. For illustrative purposes, it will be assumed that the gaseous stream enters at 5.66 million $Nm^3$ per hour, while the reactant solution enters at 75700 $m^3$ per hour. Pressure of the gas in line 1 is 70.0 bar, and the temperature of the gas is 30°C. Reactant solution is supplied at a temperature of 30°C. The countercurrent flow of liquid and gas, as illustrated, provides for good contact and reaction of the $H_2S$ in the stream to sulphur. As will be understood by those skilled in the art, water and the Fe(II) complex or chelate of (N-hydroxyethyl)ethylenediaminetriacetic acid are also produced by the reaction.

Upon exit from contactor 1, the gas stream, which is now substantially free of $H_2S$, passes via a line 4 to a reaction or contact zone 5 wherein it is contacted with a catalyst containing about one per cent Pt on activated alumina. The temperature of the exit of reactor 5 is about 100°C, pressure about 70.0 bar, and total contact time in zone 5 is 2 seconds. In this illustration, sufficient water vapour is present from the transit of the gaseous stream through contactor 1 so that water need not be added. Obviously, water may be added, if necessary. Substantially complete conversion of the COS may be achieved in this contact zone.

From contact zone 5, the gas stream, now containing $H_2S$ and $CO_2$ from the hydrolysis of COS, passes via the line 6 to a "secondary" contactor 12 where it is contacted with aqueous reactant solution to produce sulphur. Sufficient polyvalent metal ions or chelate is present in the secondary contactor 12 to convert the $H_2S$ in stream 6 to sulphur. For purposes of this illustration, the reactant solution employed is the regenerated solution containing the Fe(III) chelate of nitrilotriacetic acid to be employed in the primary contact zone, as outlined more fully hereinafter. Accordingly, the reaction of the $H_2S$ and the Fe(III) chelate of nitrilotriacetic acid produces sulphur and the reduced chelate, but, because the concentration of $H_2S$ in stream 6 is low, the reaction solution is quite suitable for use in contactor 1. Purified gas is removed via a line 13, and $CO_2$ may be removed, if desired, by known technique. After contact in secondary contactor 12 reactant solution is forwarded, via a line 14, to line 3 and thence to contactor 1. Sulphur may or may not be removed prior to entry of the reactant solution into contactor 1 (shown as dotted line box 14a).

Concomitantly, reactant solution, containing some Fe(II) chelate of nitrilotriacetic acid and sulphur, are forwarded via a line 15 to a regeneration zone 9. As shown in dotted line boxes, the sulphur may be removed prior to regeneration (dotted line box 15a), after regeneration (dotted line box 10a), or after exit from secondary contactor 12 (dotted line box 14a). Preferably, sulphur is removed prior to regeneration (dotted line box 15a).

In regenerator 9, oxygen is supplied, via a line 16, in molar excess. Preferably, the oxygen is supplied as air, in a ratio of about 2.0 or greater per mol of Fe(II) chelate in the solution. Temperature of the solution is preferably around 30°C, and pressure is suitably 2.7 bar. Regeneration in this manner has the added advantage of removing some water vapour, thus aiding in prevention of water build-up in the system and reducing bleed and make-up problems. It is not necessary that all of the Fe(II) chelate be converted.

Regenerated solution, i.e., a solution in which at least the bulk of the Fe(II) chelate has been converted to the Fe(III) chelate, is removed via a line 10. As indicated, the solution is passed via the line 10 to the secondary contactor 12 and then via the line 14 and through line 3 to contactor 1. Alternatively, a portion of the solution is passed to the secondary contactor 12 via the line 10 and the balance directly to line 14 (dotted line). Spent oxygen-containing gas is withdrawn from regenerator 9 via a line 17.

The term "zones", as employed in the specification and claims, includes, where suitable, the use of segmented equipment operated in series, or the division of one unit into multiple units because of size constraints, etc. For example, an absorption column might comprise two separate columns in which the solution from the lower portion of the first column would be introduced into the upper portion of the second column, the gaseous material from the upper portion of the first column being fed into the lower portion of the second column. Parallel operation of units is of course well within the scope of the invention.

**Claim**

A process for the removal of $H_2S$ and COS from a gaseous mixture containing $H_2S$ and COS, comprising the steps:

(a) contacting the gaseous mixture with an aqueous solution containing a reactant and separating a gaseous mixture containing COS from an aqueous mixture which absorbed $H_2S$;

(b) contacting the gaseous mixture containing COS separated in step (a) in the presence of water with a catalyst causing hydrolysis of COS and separating a gaseous mixture containing $CO_2$ and $H_2S$ from the catalyst;

(c) regenerating the aqueous mixture separated in step (a) by stripping, yielding a regenerated solution;

(d) contacting the gaseous mixture containing $CO_2$ and $H_2S$ separated in step (b) with at least a portion of the regenerated solution obtained in step (c), forming a partially reacted aqueous mixture, and separating a purified gas from the aqueous mixture, the separated aqueous mixture

being employed as aqueous solution in step (a), optionally in the presence of regenerated solution from step (c) and not used in step (d), characterized in that the reactant in the aqueous solution of step (a) comprises an ion and/or a chelate of an oxidizing polyvalent metal, which produces in step (a) a reduced reactant and sulphur, the reduced reactant being regenerated in step (c) by stripping with oxygen, in that the catalyst causing hydrolysis of COS in step (b) is a solid catalyst comprising Ni. Pd, Pt, Co, Rh or In, in that regenerated reactant obtained in step (c) produces sulphur in step (d), and in that sulphur is removed from the aqueous mixture to be used in step (a), step (d) and/or from the aqueous mixture which has been used in step (a).

**Patentanspruch**

Ein Verfahren für die Entfernung von $H_2S$ und COS aus einer gasförmigen Mischung, welche $H_2S$ und COS enthält, umfassend die Schritte:

(a) Kontaktieren der gasförmigen Mischung mit einer ein Reaktionsmittel enthaltenden wäßrigen Lösung und Abtrennen einer COS enthaltenden gasförmigen Mischung von einer wäßrigen Mischung, welche $H_2S$ absorbiert hat;

(b) Kontaktieren der COS enthaltenden in Stufe (a) abgetrennten gasförmigen Mischung mit einem Katalysator in Anwesenheit von Wasser, wodurch COS hydrolysiert wird, und Abtrennen einer $CO_2$ und $H_2S$ enthaltenden gasförmigen Mischung von dem Katalysator;

(c) Regenerieren der in Stufe (a) abgetrennten wäßrigen Mischung durch Abstreifen unter Bildung einer regenerierten Lösung;

(d) Kontaktieren der in Stufe (b) abgetrennten $CO_2$ und $H_2S$ enthaltenden gasförmigen Mischung mit mindestens einem Anteil der in Stufe (c) erhaltenen regenerierten Lösung unter Bildung einer teilreagierten wäßrigen Mischung und Abtrennen eines gereinigten Gases aus der wäßrigen Mischung, wobei die abgetrennte wäßrige Mischung als wäßrige Lösung in Stufe (a) verwendet wird, gegebenenfalls in Anwesenheit von regenerierter Lösung aus Stufe (c), welche nicht in Stufe (d) verwendet worden ist, dadurch gekennzeichnet, daß das Reaktionsmittel in der Wäßrigen Lösung von Stufe (a) ein Ion und/oder ein Chelat eines oxidierend wirkenden mehrwertigen Metalles enthält, wodurch in Stufe (a) ein reduziertes Reaktionsmittel und Schwefel gebildet werden, daß das reduzierte Reaktionsmittel durch Abstreifen mit Sauerstoff in Stufe (c) regeneriert wird, daß der in Stufe (b) die Hydrolyse von COS bewirkende Katalysator ein Ni, Pd, Pt, Co, Rh oder In enthaltender fester Katalysator ist, daß das in Stufe (c) erhaltene regenerierte Reaktionsmittel in Stufe (d) Schwefel erzeugt und daß der Schwefel aus der in Stufe (a) bzw. Stufe (d) zu verwendenden wäßrigen Mischungen und/oder aus der in Stufe (a) bereits eingesetzten wäßrigen Mischung entfernt wird.

**Revendication**

Procédé pour éliminer $H_2S$ et COS à partir d'un mélange gazeux contenant $H_2S$ et COS, comprenant les étapes de:

(a) Mise en contact du mélange gazeux avec une solution aqueuse contenant un réactif et séparation d'un mélange gazeux contenant COS d'avec un mélange gazeux qui a absorbé $H_2S$;

(b) Mise en contact du mélange gazeux contenant COS séparé dans l'étape (a) en présence d'eau avec un catalyseur causant l'hydrolyse de COS et séparant un mélange gazeux contenant $CO_2$ et $H_2S$ d'avec le catalyseur;

(c) Régénération du mélange aqueux séparé dans l'étape (a) par strippage donnant une solution régénérée;

(d) Mise en contact du mélange gazeux contenant $CO_2$ et $H_2S$ séparé dans l'étape (b) avec au moins une partie de la solution régénérée obtenue dans l'étape (c), formant un mélange aqueous ayant partiellement réagi, et séparation d'un gaz purifié d'avec le mélange aqueux, le mélange aqueux séparé étant employé sous forme de solution aqueuse dans l'étape (a), éventuellement en présence de la solution régénérée de l'étape (c) et non utilisée dans l'étape (d), caractérisé en ce le réactif dans la solution aqueuse de l'étape (a) comprend un ion et/ou un chélate d'un métal polyvalent oxydant, qui produit dans l'étape (a) un réactif réduit et du soufre, le réactif réduit étant régénéré dans l'étape (c) par strippage avec de l'oxygène, en ce que le catalyseur causant l'hydrolyse de COS dans l'étape (b) est un catalyseur solide comprenant Ni, Pd, Pt, Co, Rh ou In, en ce que le réactif régénéré obtenu dans l'étape (c) produit du soufre dans l'étape (d), et en ce que le soufre est enlevé du mélange aqueux à utiliser dans l'étape (a), l'étape (d) et/ou du mélange aqueux qui a été utilisé dans l'étape (a).

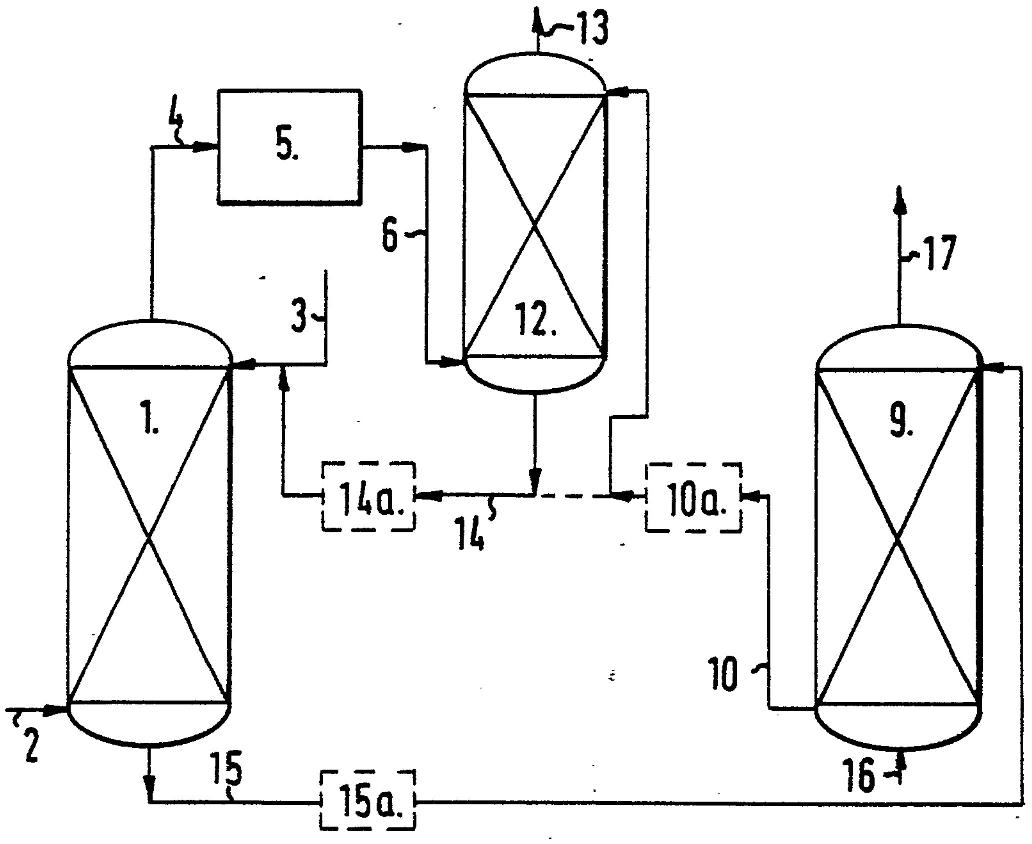
13
4
5.
6
12.
17
3
1.
9.
14a.
14
10a.
10
2
15
15a.
16